# EUROPEAN PATENT APPLICATION

(11) **EP 4 560 789 A1**
(43) Date of publication of application: **28.05.2025**
(21) Application number: 22955325.0
(22) Date of filing: 18.08.2022
(51) Int. Cl.: H01M 10/615

(54) **BATTERY BOX, BATTERY, AND ELECTRICAL DEVICE**

(71) Applicant: Contemporary Amperex Technology Co., Limited, Ningde, Fujian 352100 (CN)
(72) Inventor: HE, Runyong, Ningde, Fujian 352100 (CN); CHEN, Xingdi, Ningde, Fujian 352100 (CN); WANG, Peng, Ningde, Fujian 352100 (CN); FANG, Zhengyu, Ningde, Fujian 352100 (CN)
(74) Representative: Gong, Jinping
(86) International application number: PCT/CN2022/113175
(87) International publication number: WO 2024/036544

(57) **Abstract**

The present application relates to a battery box (10), a battery (100), and an electrical apparatus. The battery box (10) comprises a box cover (11) and a box body (12), the box body (12) and the box cover (11) covering each other to jointly define an accommodating cavity (13). A heating structure (111) is provided on the box cover (11), and the heating structure (111) includes at least one of a conductive heating plate or a heating film. By arranging the heating structure (111) including at least one of the conductive heating plate or the heating film on the box cover (11), the box cover (11) can be heated by controlling the heating structure (111) to operate under low temperature conditions, and then the heat is conducted to the inside of the battery box (10) to increase the overall temperature of the battery (100) and ensure the range and safety of the battery (100). In addition, since the conductive heating plate or the heating film has a large heating area, it is possible to heat various places inside the battery (100) as much as possible within a limited space, thereby improving heating uniformity.

## Description

### TECHNICAL FIELD

The present application relates to the technical field of batteries, and particularly relates to a battery box, a battery, and an electrical apparatus.

### BACKGROUND

Power battery refers to the power source that provides power for tools or devices. For example, power batteries are widely used in electric vehicles. With the development of electric vehicles, power batteries have become core components and thus have a large market demand.

However, batteries are particularly sensitive to operating temperatures, and their range is greatly reduced, especially when operating in winter. This has become a pain point and difficulty in the electric vehicle industry.

Typically, insulation measures are required to keep the battery at a suitable operating temperature, but the insulation effect is not ideal.

### SUMMARY OF THE INVENTION

In view of the above problems, the present application provides a battery box, a battery and an electrical apparatus, which can alleviate the problem that insulation measures are taken when the battery is running in winter, but the insulation effect is not ideal.

In a first aspect, the present application provides a battery box, comprising:
a box cover; and
a box body, the box body and the box cover covering each other to jointly define an accommodating cavity;
wherein a heating structure is provided on the box cover, and the heating structure includes at least one of a conductive heating plate or a heating film.

For the above-mentioned box cover, by arranging the heating structure including at least one of a conductive heating plate or a heating film on the box cover, the box cover can be heated by controlling the heating structure to operate under low temperature conditions, then the heat is conducted to the inside of the battery box to increase the overall temperature of the battery and ensure the range and safety of the battery. In addition, since the conductive heating plate or the heating film has a large heating area, it is possible to heat various places inside the battery as much as possible within a limited space, thereby improving heating uniformity.

In some embodiments, the heating structure includes a plurality of heating sub-structures, and the heating sub-structures are spaced apart from each other. By forming and setting a plurality of heating sub-structures, a plurality of different positions of the battery can be adaptively heated, thereby making the temperature inside the battery uniform.

In some embodiments, at least two heating sub-structures have different operating powers. By setting the working powers of at least two heating sub-structures to be different, different heating temperatures can be provided according to different positions of the battery, thereby making the internal temperature of the battery more consistent.

In some embodiments, the heating structure includes a conductive heating plate, and the box cover and the heating structure are integrally formed. Since the conductive heating plate has a certain structural strength, it can serve as at least a part of the box cover, so that the structure of the battery box can be more compact, thereby freeing up more accommodating space for the battery cells.

In some embodiments, the heating structure is bonded onto the box cover. By bonding the heating structure to the box cover, the connection of the heating structure to the box cover can be simplified, and the influence on the heating structure and its heating performance can be reduced.

In some embodiments, the heating structure is disposed on the side of the box cover facing away from the box body. Since the bottom of the box cover usually faces electrical connection structures such as busbars, arranging the heating structure on the side of the box cover facing away from the box body can isolate the heating structure from these electrical connection structures through the box cover, thereby avoiding short circuits caused by lapping and causing safety problems.

In some embodiments, the battery box is mounted on a vehicle, the vehicle comprises a vehicle body, and the box cover is configured as a part of the vehicle body. On the one hand, the space occupied by the battery box in the vehicle can be saved, and on the other hand, since the box cover is also configured as a part of the vehicle body, the function of this part of the vehicle body can be increased.

In a second aspect, the present application provides a battery, comprising the battery box in any of the above embodiments and battery cells, and the battery cells are accommodated in an accommodating cavity.

For the above-mentioned battery, by arranging the heating structure including at least one of a conductive heating plate or a heating film on the box cover, the box cover can be heated by controlling the heating structure to operate under low temperature conditions, then the heat is conducted to the inside of the battery box to increase the overall temperature of the battery and ensure the range and safety of the battery. In addition, since the conductive heating plate or the heating film has a large heating area, it is possible to heat various places inside the battery as much as possible within a limited space, thereby improving heating uniformity.

In some embodiments, the side of the box cover facing toward the box body is connected to the battery cell for supporting the battery cell. By providing the box cover as a support component for the battery cell, the battery cell and the box cover can be more closely attached, so that the heat from the heating structure can be quickly transferred to the battery cell, thus avoiding heat loss.

In a third aspect, the present application provides an electrical apparatus, comprising the battery in any of the above embodiments.

For the above-mentioned electrical apparatus, by arranging the heating structure including at least one of a conductive heating plate or a heating film on the box cover, the box cover can be heated by controlling the heating structure to operate under low temperature conditions, then the heat is conducted to the inside of the battery box to increase the overall temperature of the battery and ensure the range and safety of the battery. In addition, since the conductive heating plate or the heating film has a large heating area, it is possible to heat various places inside the battery as much as possible within a limited space, thereby improving heating uniformity.

In some embodiments, the electrical apparatus is a vehicle, the vehicle comprises a floor, and the box cover is configured as at least a part of the floor. By providing the box cover configured as at least a part of the floor, the box cover can heat not only the interior of the battery but also the passenger compartment.

In some embodiments, the floor includes a seat area and a non-seat area connected to the seat area, and the orthographic projection area of the heating structure facing toward the floor is located in the non-seat area. By setting the orthographic projection area of the heating structure facing toward the floor being located in the non-seat area, the interior of the vehicle body corresponding to the non-seat area can be heated, so that heat can be directly transferred to the interior of the vehicle body and heat loss due to other components, such as seats, can be avoided. In addition, many components are usually arranged under the seat, so placing the heating structure away from the seat area can also reduce the impact on these components.

In some embodiments, the seat area includes a front seat area and a rear seat area, the non-seat area includes a first non-seat area and a second non-seat area, the first non-seat area is located on the side of the front seat area away from the rear seat area, and the second non-seat area is located between the front seat area and the rear seat area.

The orthographic projection area of the heating structure facing toward the floor is located in the first non-seat area and/or the second non-seat area. In this way, heating can be provided at the position where passengers place their feet, thereby improving the comfort of the entire vehicle.

In some embodiments, the area of the orthographic projection area of the heating structure facing toward the floor is at least half of the area of the first non-seat area and/or at least half of the area of the second non-seat area. It has been found through research that when the area of the orthographic projection area of the heating structure facing toward the floor is at least half of the area of the first non-seat area and/or at least half of the area of the second non-seat area, the heating structure can better play its role in heating the battery and the interior of the vehicle body.

In some embodiments, the box cover includes a first body and a second body, the first body and the box body cover each other to jointly define an accommodating cavity, the second body is arranged on the side of the first body facing away from the accommodating cavity, the first body is detachably connected to the second body, and the heating structure is arranged on the side of the second body facing away from the first body.

The second body is configured as at least a part of the floor. By arranging the first body to be detachably connected to a side of the second body, and the second body being configured as at least a part of the floor, the box body and the first body can be conveniently detached from the floor as a whole, which facilitates the maintenance of the components inside the battery. Also, after disassembly, since the first body covers the opening, the components inside the box body are protected from damage.

The above description is only an overview of the technical solution of the present application. In order to better understand the technical means of the present application and thus implement them according to the contents of the specification, and in order to make the above and other objectives, features and advantages of the present application more obvious and understandable, the following is the detailed description of the present application.

### BRIEF DESCRIPTION OF DRAWINGS

By reading the detailed description of the preferred implementations below, various other advantages and benefits will become apparent to those of ordinary skill in the art. The drawings are only for the purpose of illustrating the preferred embodiments, and are not considered as limitations to the present application. For those of ordinary skills in the art, other drawings may also be obtained based on these drawings without making creative work. Moreover, in all of the drawings, the same components are indicated by the same reference numerals. In the drawings:
FIG. 1 is a structural schematic diagram of a vehicle provided in some embodiments of the present application;
FIG. 2 is a schematic exploded structural diagram of a battery according to some embodiments of the present application;
FIG. 3 is a schematic structural diagram of a box cover according to some embodiments of the present application;
FIG. 4 is a schematic sectional structural diagram of a vehicle chassis according to an embodiment of the present application;
FIG. 5 is a schematic structural diagram of a vehicle chassis according to an embodiment of the present application;
FIG. 6 is a schematic plan view of the vehicle chassis shown in FIG. 5;
FIG. 7 is a schematic structural diagram of a box cover according to other embodiments of the present application.

Reference numerals in Detailed Description are as follows:
Vehicle 1000;
Battery 100;
Controller 200;
Motor 300;
Chassis 400;
Floor 410;
Battery box 10;
Box cover 11, Heating structure 111, First heating sub-structure 1111, Second heating sub-structure 1112, Third heating sub-structure 1113, First body 112, Second body 113, Box body 12, Accommodating cavity 13;
Battery cell 20;
Seat area A1;
Front seat area A11, Rear seat area A12;
Non-seat area A2;
First non-seat area A21, Second non-seat area A22.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two). Similarly, "a plurality of groups" refers to two or more (including two) groups, and "a plurality of sheets" refers to two or more (including two) sheets.

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be configured and operate in a specific orientation, and therefore, cannot be understood as a limitation to the present application.

In the description of the embodiments of the present application, unless otherwise specified and limited, the technical terms "mounting", "linking", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

In recent years, with the continuous development of new energy vehicle technology and the continuous increase in the number of new energy vehicles, the development of the power battery industry and power battery technology has been dramatically promoted.

Batteries generally work well between 15°C and 35°C. When the operating temperature is below 15°C, the energy storage and power output efficiency will drop significantly. This will greatly reduce range and power performance, and also shorten service life. In addition, especially for lithium batteries, lithium batteries easily release lithium from the electrolyte during charging at low temperatures, resulting in irreversible energy loss of the battery, and the released lithium may pass through the separator and cause safety accidents.

In order to solve problems such as battery range at low temperatures, in some cases, it is proposed to take insulation measures inside the battery. Specifically, for the battery, the battery module is usually assembled onto the battery box to form a battery structure. There is a gap between the battery module and the battery box, which forms a path for heat dissipation from the battery module. A common battery insulation measure is to fill the gap with an insulation structure, such as foam, to block the heat dissipation path of the battery module through the insulation structure, but there is still the problem of unsatisfactory insulation effect.

Based on the above considerations, in order to solve the problem of unsatisfactory thermal insulation effect, the applicant has discovered and designed a battery box. The battery box includes a box cover and a box body. The box body and the box cover cover each other to jointly define an accommodating cavity; A heating structure is provided on the box cover, and the heating structure includes at least one of a conductive heating plate or a heating film. By arranging the heating structure including at least one of a conductive heating plate or a heating film on the battery box cover, the battery box cover the can be heated by controlling the heating structure to operate under low temperature conditions, then the heat is conducted to the inside of the battery to increase the overall temperature of the battery and ensure the range and safety of the battery.

The battery disclosed in the embodiment of the present application can be used, but not limited to, in electrical apparatus such as a vehicle, a ship, or an aircraft.

Examples of the present application provide an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, and so on. The electric toy may include fixed or mobile electric toys, such as game consoles, electric vehicle toys, electric ship toys, and electric airplane toys. The spacecraft may include airplanes, rockets, space shuttles, spaceships, etc.

For the convenience of description in the following embodiments, an electrical apparatus being a vehicle 1000 according to an embodiment of the present application is taken as an example for the description.

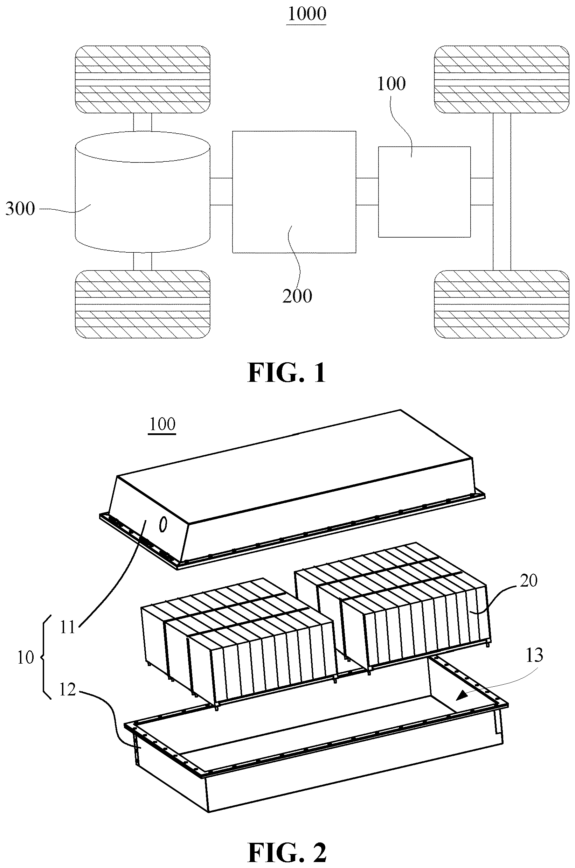

Referring to FIG. 1, FIG. 1 is a schematic structural diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to FIG. 2, FIG. 2 is an exploded view of a battery 100 provided in some embodiments of the present application. The battery 100 includes a battery box 10 and battery cells 20, the battery cells 20 being accommodated within the battery box 10. The battery box 10 is used to provide an accommodating space for the battery cell 20, and the battery box 10 can be of various structures. In some embodiments, the battery box 10 may include a box cover 11 and a box body 12, the box cover 11 and the box body 12 cover each other, and the box cover 11 and the box body 12 jointly define an accommodating cavity 13 for accommodating the battery cells 20. The box body 12 may be a hollow structure with one end open, and the box cover 11 may be a plate-like structure. The box cover 11 covers the open side of the box body 12 so that the box cover 11 and the box body 12 jointly define the accommodating cavity 13. In other embodiments, both the box cover 11 and the box body 12 may also be a hollow structure with one side open, and the open side of the box cover 11 covers the open side of the box body 12. Of course, the battery box 10 formed by the box cover 11 and the box body 12 may be in various shapes, such as a cylinder or a cuboid.

In the battery 100, there may be a plurality of battery cells 20, and the plurality of battery cells 20 can be connected in series or in parallel or in a mixed connection, where the mixed connection means that the plurality of battery cells 20 are connected in both series and parallel. The plurality of battery cells 20 can be directly connected together in series or in parallel or in mixed connection, and then the whole composed of the plurality of battery cells 20 can be accommodated in the battery box 10; and of course, the battery 100 may also be in the form of a battery module first formed by the plurality of battery cells 20 being connected in series or in parallel or in mixed connection, then multiple battery modules can be connected in series or in parallel or in mixed connection to form a whole, and accommodated in the battery box 10. The battery 100 may further comprise other structures, for example, the battery 100 may further include a bus component for realizing electrical connections between the plurality of battery cells 20.

Each battery cell 20 may be a secondary battery or a primary battery; or it may be a lithium-sulfur battery, a sodium-ion battery or a magnesium-ion battery, but is not limited thereto. The battery cells 20 may be cylindrical, flat, rectangular, or in other shapes.

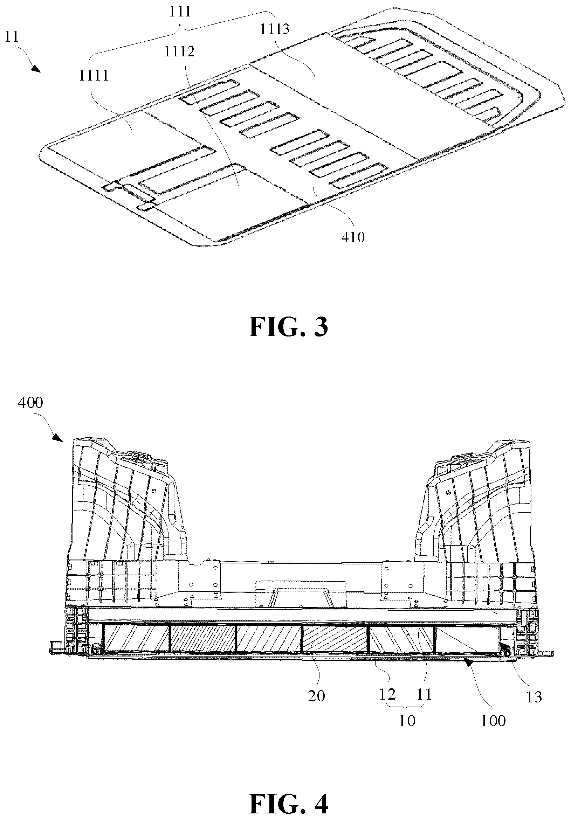

According to some embodiments of the present application, referring to FIGS. 2 and 3, FIG. 3 is a schematic structural diagram of a box cover according to some embodiments of the present application. The present application provides a battery box 10. The battery box 10 includes a box cover 11 and a box body 12. The box body 12 and the box cover 11 cover each other to jointly define an accommodating cavity 13. A heating structure 111 is provided on the box cover 11, and the heating structure 111 includes at least one of a conductive heating plate or a heating film.

The conductive heating plate refers to a plate-shaped component that generates heat by being energized or supplied with electricity to heat other components.

The heating film is a film-like component that can generate heat when energized to heat other components. The term "film/film-like component" includes but is not limited to a onelayer or multi-layer structure, but such a layer generally has a very small thickness, for example, not on the same order of magnitude compared to its length and width.

By arranging the heating structure 111 including at least one of a conductive heating plate or a heating film on the box cover 11, the box cover 11 can be heated by controlling the heating structure 111 to operate under low temperature conditions, then the heat is conducted to the inside of the battery box 10 to increase the overall temperature of the battery 100 and ensure the range and safety of the battery 100.

In addition, since the conductive heating plate or the heating film has a large heating area, it is possible to heat various places inside the battery 100 as much as possible within a limited space, thereby improving heating uniformity.

Optionally, when the heating structure 111 includes a heating film, the box cover 11 may include some supporting structures to support the heating film.

According to some embodiments of the present application, referring to FIG. 3, the heating structure 111 includes a plurality of heating sub-structures, and the heating sub-structures are spaced apart from each other.

Optionally, the areas of the heating sub-structures may be the same or different.

In an embodiment of the present application, the heating structure 111 includes three heating sub-structures. Specifically, the three heating sub-structures are a first heating sub-structure 1111, a second heating sub-structure 1112, and a third heating sub-structure 1113, respectively.

Optionally, the heating sub-structures are connected to each other via a conductive member, or the heating sub-structures are separated from each other and can be powered individually.

By forming and setting a plurality of heating sub-structures, a plurality of different positions of the battery 100 can be adaptively heated, thereby making the temperature inside the battery 100 uniform.

According to some embodiments of the present application, referring to FIG. 3, at least two heating sub-structures have different operating powers.

By setting the working powers of at least two heating sub-structures to be different, different heating temperatures can be provided according to different positions of the battery 100, thereby making the internal temperature of the battery 100 more consistent.

According to some embodiments of the present application, referring to FIG. 3, the box cover 11 includes a central area and a peripheral area surrounding the central area, and the heating structure 111 is disposed in the peripheral area.

In a low temperature environment, the temperature around the battery 100 is usually very low, while the temperature in the middle is very high. Therefore, by arranging the heating structure 111 in the peripheral area, heat loss to the surroundings of the battery 100 can be avoided, thereby ensuring temperature consistency within the battery 100.

Specifically, the central area is rectangular, and the peripheral area is rectangular ring-shaped.

According to some embodiments of the present application, referring to FIG. 3, the heating structure 111 includes a conductive heating plate, and the box cover 11 and the heating structure 111 are integrally formed.

Since the conductive heating plate has a certain structural strength, it can serve as at least a part of the box cover 11, so that the structure of the battery box 10 can be more compact, thereby freeing up more accommodating space for the battery cells 20.

Optionally, the conductive heating plate's orthographic projection facing toward the box body 12 covers the entire opening.

Alternatively, the box cover 11 is configured to be formed of only a conductive heating plate.

In this way, the entire area of the accommodating cavity 13 can be heated by the conductive heating plate.

According to other embodiments of the present application, referring to FIG. 3, the heating structure 111 is bonded onto the box cover 11.

By bonding the heating structure 111 to the box cover 11, the connection of the heating structure 111 to the box cover 11 can be simplified, and the influence on the heating structure 111 and its heating performance can be reduced. Especially when the heating structure 11 includes a heating film, bonding can further improve the binding tightness between the heating film and the box cover 11, thereby reducing heat loss and improving the heating effect.

In other embodiments, the heating structure 111 may also be connected to the box cover 11 by means of fixing members such as screws, bolts, and buckles, which is not limited here.

According to some embodiments of the present application, referring to FIG. 3, the heating structure 111 is disposed on the side of the box cover 11 facing away from the box body 12.

Since the bottom of the box cover 11 usually faces electrical connection structures such as busbars, arranging the heating structure 111 on the side of the box cover 11 facing away from the box body 12 can isolate the heating structure 111 from these electrical connection structures through the box cover 11, thereby avoiding short circuits caused by lapping and causing safety problems.

According to some embodiments of the present application, referring to FIGS. 3 to 5, the battery box 10 is mounted on a vehicle, the vehicle comprises a vehicle body, and the box cover 11 is configured as a part of the vehicle body.

On the one hand, the space occupied by the battery box 10 in the vehicle can be saved, and on the other hand, since the box cover 11 is also configured as a part of the vehicle body, the function of this part of the vehicle body can be increased.

Optionally, the vehicle body includes a chassis 400, and the box cover 11 is configured as a part of the chassis 400. Since the battery 100 is usually disposed at the bottom of the vehicle body, the box cover 11 is configured as a part of the chassis 400, which can reduce the occupied space of the chassis 400 and increase the function of the chassis 400.

Optionally, the chassis 400 includes a floor 410, and the box cover 11 is configured as a part of the floor 410.

According to some embodiments of the present application, referring to FIGS. 3 to 5, the present application provides a battery 100. The battery 100 includes the battery box 10 in any of the above embodiments and battery cells 20. The battery cell 20 is accommodated in the accommodating cavity 13.

By arranging the heating structure 111 including at least one of a conductive heating plate or a heating film on the box cover 11, the box cover 11 can be heated by controlling the heating structure 111 to operate under low temperature conditions, then the heat is conducted to the inside of the battery box 10 to increase the overall temperature of the battery 100 and ensure the range and safety of the battery 100.

In addition, since the conductive heating plate or the heating film has a large heating area, it is possible to heat various places inside the battery 100 as much as possible within a limited space, thereby improving heating uniformity.

According to some embodiments of the present application, the side of the box cover 11 facing toward the box body 12 is connected to the battery cell 20 for supporting the battery cell 20.

By providing the box cover 11 as a support component for the battery cell 20, the battery cell 20 and the box cover 11 can be more closely attached, so that the heat from the heating structure 111 can be quickly transferred to the battery cell 20, thus avoiding heat loss.

In other embodiments, the side of the box cover 11 facing toward the box body 12 and the battery cells 20 may also be spaced apart, which is not limited here.

According to some embodiments of the present application, the present application provides an electrical apparatus including the battery 100 in any one of the above embodiments.

By arranging the heating structure 111 including at least one of a conductive heating plate or a heating film on the box cover 11, the box cover 11 can be heated by controlling the heating structure 111 to operate under low temperature conditions, then the heat is conducted to the inside of the battery 100 to increase the overall temperature of the battery 100 and ensure the range and safety of the battery 100.

In addition, since the conductive heating plate or the heating film has a large heating area, it is possible to heat various places inside the battery 100 as much as possible within a limited space, thereby improving heating uniformity.

According to some embodiments of the present application, referring to FIGS. 4 to 6, the electrical apparatus is a vehicle 1000, the vehicle 1000 includes a floor 410, and the box cover 11 is configured as at least a part of the floor 410.

In some cases, the floor 410, as a part of the chassis 500, usually has only a single supporting function, and its overall form and function are relatively simple. In addition, the floor 410 is usually a single-layer structure, which is easy to dissipate heat. In winter, the heat in the vehicle is quickly dissipated through the floor 410, which is not conducive to the passenger experience. Meanwhile, if a battery 100 is placed at the bottom of the floor 410, heat will also be taken away from the battery 100 due to the lowered temperature of the floor 410, thereby causing the temperature of the battery 100 to be lower.

Therefore, by providing the box cover 11 configured as at least a part of the floor 410, the box cover 11 can heat not only the interior of the battery 100 but also the passenger compartment.

Optionally, the box cover 11 is configured as the entire floor 410, and can also be configured as a part of the floor 410, which is not limited here.

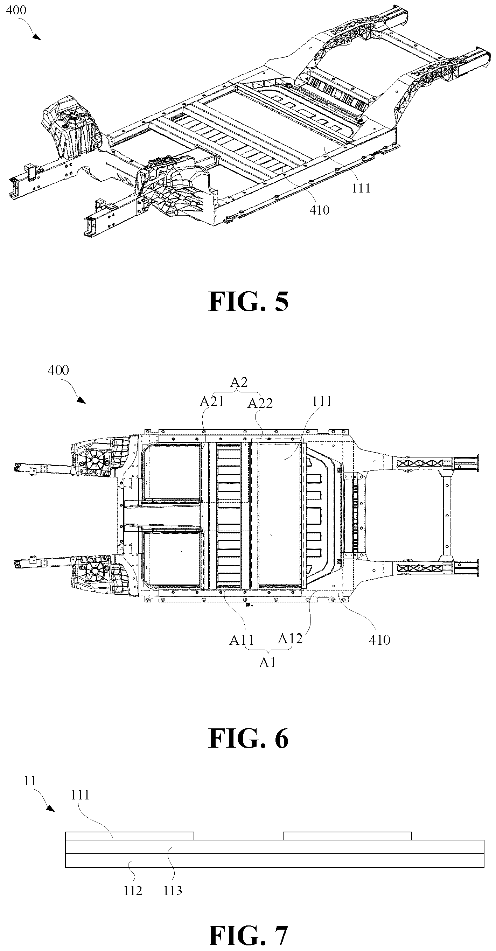

According to some embodiments of the present application, referring to FIG. 6, the floor 410 includes a seat area A1 and a non-seat area A2 connected to the seat area A1, and the orthographic projection area of the heating structure 111 facing toward the floor 410 is located in the non-seat area A2.

The seat area A1 refers to the orthographic projection area of the seats in the vehicle body facing toward the floor 410, wherein the seats include front seats, middle seats, and rear seats.

The non-seat area A2 refers to other areas except the seat area A1, for example, the area in front of the front seats, the area between the front seats and the rear seats, the trunk area, etc., which is not limited here.

The orthographic projection area of the heating structure 111 facing toward the floor 410 specifically refers to the projection area of the heating structure 111 facing toward the floor 410 along the thickness direction of the floor 410.

By setting the orthographic projection area of the heating structure 111 facing toward the floor 410 being located in the non-seat area A2, the interior of the vehicle body corresponding to the non-seat area A2 can be heated, so that heat can be directly transferred to the interior of the vehicle body and heat loss due to other components, such as seats, can be avoided. In addition, many components are usually arranged under the seat, so placing the heating structure 111 away from the seat area A1 can also reduce the impact on these components.

According to some embodiments of the present application, referring to FIG. 6, the seat area A1 includes a front seat area A11 and a rear seat area A12, the non-seat area A2 includes a first non-seat area A21 and a second non-seat area A22, the first non-seat area A21 is located on the side of the front seat A11 area away from the rear seat area A12, and the second non-seat area A22 is located between the front seat area A11 and the rear seat area A12. The orthographic projection area of the heating structure 111 facing toward the floor 410 is located in the first non-seat area A21 and/or the second non-seat area A22.

In this way, heating can be provided at the position where passengers place their feet, thereby improving the comfort of the entire vehicle.

According to some embodiments of the present application, referring to FIG. 6, the area of the orthographic projection area of the heating structure 111 facing toward the floor 410 is at least half of the area of the first non-seat area A21 and/or at least half of the area of the second non-seat area A22.

It has been found through research that when the area of the orthographic projection area of the heating structure 111 facing toward the floor 410 is at least half of the area of the first non-seat area A21 and/or at least half of the area of the second non-seat area A22, the heating structure 111 can better play its role in heating the battery 100 and the interior of the vehicle body.

According to some embodiments of the present application, referring to FIGS. 2, 6 and 7, the box cover 11 includes a first body 112 and a second body 113, the first body 112 and the box body 12 cover each other to jointly define an accommodating cavity 13, the second body 113 is arranged on the side of the first body 112 facing away from the accommodating cavity 13, the first body 112 is detachably connected to the second body 113, and the heating structure 111 is arranged on the side of the second body 113 facing away from the first body 112. The second body 113 is configured as at least a part of the floor 410.

By arranging the first body 112 to be detachably connected to a side of the second body 113, and the second body 113 being configured as at least a part of the floor 410, the box body 12 and the first body 112 can be conveniently detached from the floor 410 as a whole, which facilitates the maintenance of the components inside the battery 100. Also, after disassembly, since the first body 112 covers the opening, the components inside the box body 12 are protected from damage.

According to some embodiments of the present application, referring to FIGS. 2 to 3, the present application provides a battery box 10. The battery box 10 includes a box cover 11 and a box body 12. A heating structure 111 is disposed on the box cover 11 and bonded to the side of the box cover 11 facing away from the box body 12. The heating structure 111 includes at least one of a conductive heating plate or a heating film. The heating structure 111 includes a first heating sub-structure 1111, a second heating sub-structure 1112, and a third heating sub-structure 1113 which are spaced apart from each other. At least two of the first heating sub-structure 1111, the second heating sub-structure 1112, and the third heating sub-structure 1113 have different operating powers.

According to some embodiments of the present application, referring to FIGS. 2 to 3, the present application provides a battery 100. The battery 100 includes the battery box 10 in the above embodiments and battery cells 20. The battery cell 20 is accommodated in the accommodating cavity 13.

According to some embodiments of the present application, referring to FIGS. 1 to 6, the present application provides an electrical apparatus, comprising the battery 100 in the above-mentioned embodiments, the electrical apparatus is a vehicle 1000, the vehicle 1000 includes a floor 410, and the box cover 11 is configured as at least a part of the floor 410. The floor 410 includes a seat area A1 and a non-seat area A2 connected to the seat area A1, the seat area A1 includes a front seat area A11 and a rear seat area A12, the non-seat area A2 includes a first non-seat area A21 and a second non-seat area A22, the first non-seat area A21 is located on the side of the front seat A11 area away from the rear seat area A12, and the second non-seat area A22 is located between the front seat area A11 and the rear seat area A12. The orthographic projection area of the heating structure 111 facing toward the floor 410 is located in the first non-seat area A21 and the second non-seat area A22.

Finally, it should be noted that: the aforementioned embodiments are only used for illustrating the technical solution of the present application, rather than limiting it. Although the present application has been described in detail with reference to the foregoing embodiments, it should be understood by those of ordinary skills in the art that: it is still possible to modify the technical solutions recited in the foregoing embodiments, or to conduct equivalent replacements on some or all of the technical features; and these modifications and replacements would not make the nature of the corresponding technical solutions depart from the scope of the technical solutions of embodiments of the present invention, and should all be covered by the claims and description of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery box (10), comprising:
a box cover (11); and
a box body (12), the box body and the box cover (11) covering each other to jointly define an accommodating cavity (13);
wherein a heating structure (111) is provided on the box cover (11), and the heating structure (111) includes at least one of a conductive heating plate or a heating film.

2. The battery box (10) according to claim 1, wherein the heating structure (111) comprises a plurality of heating sub-structures, and the heating sub-structures are spaced apart from each other.

3. The battery box (10) according to claim 2, wherein the operating powers of at least two of the heating sub-structures are different.

4. The battery box (10) according to any one of claims 1 to 3, wherein the heating structure (111) comprises the conductive heating plate, and the box cover (11) and the heating structure (111) are integrally formed.

5. The battery box (10) according to any one of claims 1 to 3, wherein the heating structure (111) is bonded onto the box cover (11).

6. The battery box (10) according to any one of claims 1 to 5, wherein the heating structure (111) is arranged on the side of the box cover (11) facing away from the box body (12).

7. The battery box (10) according to any one of claims 1 to 6, wherein the battery box (10) is mounted in a vehicle, the vehicle comprises a vehicle body, and the box cover (11) is configured as a part of the vehicle body.

8. A battery (100), comprising the battery box (10) according to any one of claims 1 to 7 and a battery cell (20), wherein the battery cell (20) is accommodated in the accommodation cavity (13).

9. The battery (100) according to claim 8, wherein the side of the box cover (11) facing toward the box body (12) is connected to the battery cell (20) for supporting the battery cell (20).

10. An electrical apparatus, comprising the battery (100) according to claim 8 or 9.

11. The electrical apparatus according to claim 10, wherein the electrical apparatus is the vehicle (1000), the vehicle (1000) comprises a floor (410), and the box cover (11) is configured as at least a part of the floor (410).

12. The electrical apparatus according to claim 11, wherein the floor (410) comprises a seat area (A1) and a non-seat area (A2) connected to the seat area, and the orthographic projection area of the heating structure (111) facing toward the floor is located in the non-seat area (A2).

13. The electrical apparatus according to claim 12, wherein the seat area (A1) includes a front seat area (A11) and a rear seat area (A12), the non-seat area (A2) includes a first non-seat area (A21) and a second non-seat area (A22), the first non-seat area (A21) is located on the side of the front seat area (A11) away from the rear seat area (A12), and the second non-seat area (A12) is located between the front seat area (A11) and the rear seat area (A12);
the orthographic projection area of the heating structure (111) facing toward the floor (410) is located in the first non-seat area (A21) and/or the second non-seat area (A22).

14. The electrical apparatus according to claim 13, wherein the area of the orthographic projection area of the heating structure (111) facing toward the floor (410) is at least half of the area of the first non-seat area (A21) and/or at least half of the area of the second non-seat area (A22).

15. The electrical apparatus according to any one of claims 11 to 14, wherein the box cover (11) comprises a first body (112) and a second body (113), the first body (112) and the box body (12) cover each other to jointly define the accommodating cavity (13), the second body (113) is arranged on the side of the first body (112) facing away from the accommodating cavity (13), the first body (112) is detachably connected to the second body (113), and the heating structure (111) is arranged on the side of the second body (113) facing away from the first body (112);
wherein the second body (113) is configured as at least a part of the floor (410).
